# EUROPEAN PATENT APPLICATION

(11) **EP 4 811 257 A1**
(43) Date of publication of application: **23.09.2026**
(21) Application number: 26165054.3
(22) Date of filing: 16.03.2026
(51) Int. Cl.: G06Q 30/0201, G06Q 30/0283, G06Q 30/0601

(54) **ADAPTIVE PRICING AND INVENTORY ENGINE**

(30) Priority: 17.03.2025 US 202519081492
(71) Applicant: eBay Inc., San Jose, CA 95125 (US)
(72) Inventor: VENKATESAN MURALIDHARAN, Narpavirajan, SAN JOSE, 95125 (US)
(74) Representative: Müller-Boré & Partner Patentanwälte PartG mbB

(57) **Abstract**

Methods, systems, and computer storage media for providing an adaptive pricing and inventory engine in an item listing system are described. The adaptive pricing and inventory engine supports dynamic pricing optimization by integrating real-time condition assessment and market-driven pricing adjustments. The adaptive pricing and inventory engine begins with AR/MR visual recognition, which scans items, segments damaged areas, and extracts condition-related features. Machine learning then analyzes the image data to generate a damage score, ensuring an objective assessment for price adjustments. The system aggregates market data, including competitor pricing, historical sales, and buyer demand, to inform dynamic pricing decisions. The machine learning price prediction engine processes these inputs to generate an optimized price recommendation, which is presented through an interactive seller interface. Sellers can manually adjust or automate pricing updates, while the system continuously updates marketplace listings in real time to maintain competitive pricing based on evolving demand and inventory conditions.

## Description

### BACKGROUND

Users can interact with item listing systems that support storing items in item databases and providing a search system for receiving queries and identifying search result items based on the queries. The item listing system provides a seamless user experience when browsing through a variety of products. The item listing system allows users to search and discover products through a detailed and organized catalog, enhancing the browsing process. The item listing system may also incorporate features that support item listing, such as dynamic item categorization, real-time inventory updates, and customizable filtering options. The item listing system supports pricing functionality by allowing sellers to set and update the price for each product in the item listing system. It enables price adjustments based on various factors such as promotions, discounts, or market conditions.

### SUMMARY

Various aspects of the technology described herein are generally directed to systems, methods, and computer storage media for, among other things, providing an adaptive pricing and inventory engine that integrates AR/MR (Augmented Reality/Mixed Reality) technologies, machine learning (ML), and automated data processing to optimize pricing and inventory management. Using AR/MR visual recognition, the adaptive pricing and inventory engine assesses product condition, including damage levels, and extracts key features like age and metadata. This data is processed alongside real-time market inputs, such as demand, supply trends, competitor pricing, and seasonal variations. An ML model dynamically predicts optimized selling prices based on these inputs, while post-processing ensures validation and confidence intervals. The adaptive pricing and inventory engine eliminates manual assessments, adapts to market fluctuations, and enables data-driven decisions, improving inventory turnover, profitability, and market efficiency.

In operation, an item image for an item is captured. A damage score is generated based on damaged areas associated with item features of the item. Dynamic price analysis data associated with the item is identified. Based on the damage score and the dynamic price analysis data comprising real-time inputs that enable dynamic pricing predictions, a predicted price is generated for the item using a machine learning prediction engine. The predicted price is communicated to a client to cause the predicted price to be displayed.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The technology described herein is described in detail below with reference to the attached drawing figures, wherein:
FIGS. 1A - 1H are schematics associated with providing adaptive pricing and inventory management in an item listing system, in accordance with aspects of the technology described herein;
FIG. 2A is a block diagram associated with providing adaptive pricing and inventory management in an item listing system, in accordance with aspects of the technology described herein;
FIG. 2B is a flow diagram associated with providing adaptive pricing and inventory management, in accordance with aspects of the technology described herein;
FIG. 3 provides a first exemplary method of providing adaptive pricing and inventory management in an item listing system, in accordance with aspects of the technology described herein;
FIG. 4 provides a second exemplary method of providing adaptive pricing and inventory management in an item listing system, in accordance with aspects of the technology described herein;
FIG. 5 provides a third exemplary method of providing adaptive pricing and inventory management in an item listing system, in accordance with aspects of the technology described herein
FIG. 6 provides a block diagram of an exemplary item listing system computing environment suitable for use in implementing aspects of the technology described herein;
FIG. 7 provides a block diagram of an exemplary distributed computing environment suitable for use in implementing aspects of the technology described herein; and
FIG. 8 is a block diagram of an exemplary computing environment suitable for use in implementing aspects of the technology described herein.

### DETAILED DESCRIPTION

### OVERVIEW

An item listing system and platform supports storing items (products or assets) in item databases and provides a search system for receiving queries and identifying search result items based on the queries. An item (e.g., physical item or digital item) refers to a product or asset that is provided for listing on an item listing platform. Search systems support identifying, for received queries, result items from item databases. Item databases can specifically be for content platform or item listing platforms such as EBAY content platform, developed by EBAY INC., of San Jose, California.

An item listing system may also provide generative-AI-supported applications ("generative AI applications") that leverage generative AI models (e.g., Large Language Models - "LLM") to create, generate, or produce content, data or outputs. LLMs are a specific class of generative AI models that are primarily focused on generating human-like text. Generative AI models, like GPT (Generative-Pre-trained Transformer) and its variants, are designed to generate human-like text or other types of data based on the input they receive (e.g., via a prompt interface). These applications use generative AI to perform various task across different domains to provide improvement in automation, efficiency, and human-like interaction.

The item listing system can support pricing by enabling sellers to set and manage the price of each product in their inventory. The item listing system allows sellers to easily adjust prices in response to factors such as market demand, special promotions, seasonal sales, or changes in cost. It often includes features for setting different pricing tiers, such as discounts for bulk purchases, and can automatically apply rules for sales events or time-limited offers. Additionally, the item listing system calculates and displays the total cost for customers, factoring in applicable taxes, shipping fees, and any other charges, ensuring the final price is clear and accurate. To streamline pricing updates, the item listing system may also allow for bulk editing or automated pricing adjustments based on predefined criteria, helping sellers maintain competitive and consistent pricing.

Conventional item listing systems are not configured with a comprehensive computing logic and infrastructure to effectively and efficiently provide adaptive pricing and inventory management, particularly with regard to varying levels of damage, age, and market demand of items in an item listing system. This limitation arises from fragmented systems, heavy reliance on manual processes, and the absence of tools capable of adapting to dynamic market conditions. As a result, businesses encounter inefficiencies that impede revenue recovery, hinder inventory turnover, and complicate decision-making.

Pricing systems in use today tend to rely on static or historical models that fail to consider real-time factors such as fluctuating demand, regional preferences, or current market supply. This inability to adapt leads to situations where products are either overpriced, causing them to remain unsold, or underpriced, resulting in revenue losses. At the same time, evaluating product damage remains inefficient, as assessments are typically performed manually or with basic tools that lack precision. The process often fails to quantify damage accurately or link the extent of damage to appropriate price adjustments. This subjectivity can lead to pricing discrepancies, disputes, and eroded buyer trust, while existing technologies struggle to automate this critical integration.

An equally overlooked factor is product age, a key determinant of value, particularly for goods like electronics, fashion items, and perishables that depreciate quickly. Traditional systems fail to account for the relationship between age and demand, leaving older items languishing in inventory and contributing to seller losses. These issues are compounded by fragmented data integration. Effective pricing requires the aggregation of diverse inputs such as market trends, competitor pricing, product metadata, and compliance regulations. Current systems, however, lack the ability to seamlessly connect these data sources, preventing sellers from making real-time, data-driven decisions.

Adding to this complexity, sellers still rely heavily on manual processes for product inspection, pricing decisions, and inventory placement. These methods are not only time-consuming but also prone to human error and inefficiency, particularly at scale. The lack of automation further slows decision-making, delaying necessary pricing adjustments and resulting in stagnant inventory.

Finally, buyer confidence is frequently undermined by incomplete or unclear information about a product's condition and pricing rationale. Buyers are unlikely to engage with listings that fail to provide a transparent, data-backed justification for pricing, reducing overall trust and engagement. Taken together, these limitations highlight significant gaps in existing technologies, preventing businesses from optimizing pricing strategies, improving inventory turnover, and meeting the needs of both sellers and buyers in fast-changing market environments.

By way of example, Mark is an independent sneaker reseller who specializes in selling limited-edition shoes, including used and slightly damaged pairs. He recently acquired a batch of Air Jordans, some of which have minor scuff marks and discoloration. Since the shoes vary in condition and age, pricing them correctly is a challenge. Mark typically relies on competitor listings and past sales history to determine prices, but these methods fail to account for real-time market demand, regional trends, and the specific condition of each pair.

His current pricing system is static, meaning it doesn't adjust for fluctuations in supply and demand. As a result, he often overprices some pairs, leading to slow-moving inventory, while underpricing others, cutting into his profits. To make matters worse, his damage assessments are done manually, which is inconsistent and prone to human error, leaving some buyers skeptical about the accuracy of his listings. Without an item listing system that can quantify damage, factor in market trends, and optimize pricing dynamically, Mark struggles with inventory stagnation and lost revenue opportunities. Buyers hesitate to purchase because his listings lack transparent pricing insights, and he often faces pricing disputes. Additionally, he frequently misjudges how long a particular model will remain in demand, causing him to hold onto inventory for too long or sell too quickly at an unoptimized price. As such, a more comprehensive adaptive pricing and inventory engine - with an alternative basis for providing adaptive pricing and inventory management functionality- can improve computing operations and interfaces for item listing systems.

### DESCRIPTION OF TECHNICAL SOLUTION

At a high level, adaptive pricing and inventory engine that integrates AR/MR (Augmented Reality/Mixed Reality) technologies, machine learning (ML), and automated data processing to optimize pricing and inventory management is provided. Using AR/MR visual recognition, the adaptive pricing and inventory engine accurately assesses product condition, including damage levels, and extracts key features like age and metadata. This data is processed alongside real-time market inputs, such as demand, supply trends, competitor pricing, and seasonal variations. An ML model dynamically predicts optimized selling prices based on these inputs, while post-processing ensures validation and confidence intervals. The technical solution eliminates manual assessments, adapts to market fluctuations, and enables data-driven decisions, improving inventory turnover, profitability, and market efficiency.

At its core, the adaptive pricing and inventory engine begins by capturing an item's image using an Augmented Reality (AR) or Mixed Reality (MR) visual recognition engine, which scans the product, detects and segments any damaged areas, and extracts key condition-related features such as wear patterns, scratches, or structural impairments. This process eliminates the subjectivity of manual assessments, ensuring a standardized evaluation of item condition. The damage segmentation engine then applies image processing algorithms to isolate and quantify these imperfections, generating a damage score that serves as an objective measure of depreciation. For example, a pair of lightly scuffed Air Jordans might receive a damage score of 10%, whereas a pair with deep scratches and sole wear might be rated at 35%, ensuring condition-based pricing adjustments.

Once the item's condition is assessed, the market data and pricing analysis engine aggregates and analyzes real-time market trends, competitor pricing, historical sales performance, and regional demand variations to inform the pricing process. The market data and pricing analysis engine continuously pulls data from marketplace APIs, sales reports, and seasonal demand indicators, ensuring that the pricing recommendations remain aligned with current economic conditions and competitive benchmarks. If similar Air Jordans are selling at an average of $200 in the seller's region, but demand is currently high due to a seasonal trend, the adaptive pricing and inventory engine may recommend a slightly higher price adjustment to maximize returns.

With both the condition assessment and market data available, the machine learning price optimization engine processes these inputs to generate an optimized price prediction. The machine learning price optimization engine relies on supervised learning models, such as regression and neural networks, to detect pricing patterns and dynamically adjust for factors such as damage severity, product age, competitor price trends, and demand elasticity. The machine learning price optimization engine also applies confidence interval calculations, ensuring that pricing recommendations include a reliability score that helps sellers understand pricing fluctuations. For instance, if the machine learning price optimization engine suggests listing a product at $185 ± $10, it indicates that pricing could shift within that range based on ongoing market conditions.

The machine learning price optimization engine can include a continuous learning mechanism where pricing performance, actual sales data, and post-listing engagement (e.g., buyer clicks, time to sale) are fed back into the model. This would allow the machine learning price optimization engine to refine pricing predictions over time by learning from real-world seller and buyer behavior, improving accuracy with each transaction. For example, if a specific category of products (e.g., vintage sneakers) consistently sells above the predicted price, the adaptive pricing and inventory engine should adjust future pricing recommendations accordingly.

Once the predicted price is generated, the seller interaction and recommendation engine presents the predicted price alongside pricing insights, market trends, and competitive comparisons through an interactive seller dashboard. This interface allows sellers to review, accept, or adjust pricing recommendations based on additional business strategies, such as offering discounts for quick sales or setting a premium price for limited-edition products with high demand. To enhance transparency, the adaptive pricing and inventory engine integrates explainable AI (XAI), which provides reasoning behind the price recommendation, such as "Competitor prices increased by 5% this week" or "High demand in your region suggests a price increase of 7%." This allows sellers to make informed decisions rather than blindly following system-generated pricing.

An adaptive pricing and inventory engine client functions as a user client that operates within the broader system, facilitating the interaction between sellers and the pricing optimization framework. It acts as an intermediary that ensures seamless communication between the pricing engines and the seller's workflow, enabling dynamic updates, inventory tracking, and real-time pricing adjustments. To support seller engagement, the adaptive pricing and inventory engine client provides access to the adaptive pricing and inventory engine client interface 162, which serves as the primary user-facing component. Through this interface, sellers can view and manage pricing recommendations, analyze market data, and interact with predictive insights.

By integrating computer vision for condition-based pricing, real-time market data analysis, machine learning-based price predictions, and automated inventory management, the technical solution eliminates manual inefficiencies, improves pricing accuracy, and enhances seller profitability. This adaptive and intelligent approach ensures that pricing decisions remain competitive and data-driven, allowing sellers to maximize revenue while maintaining efficient inventory turnover.

By way of example, a seller looking to list a pair of lightly worn Air Jordans on an online marketplace uses the adaptive pricing and inventory engine to determine the optimal selling price. The process begins when the seller captures an image of the shoes using an AR/MR-enabled device. The computer vision and condition assessment engine analyze the image, automatically identifying scuff marks and slight creasing on the toe box. Using damage segmentation algorithms, the computer vision and condition assessment engine isolates the affected areas and assigns a damage score of 12%, ensuring an objective and consistent assessment of the shoe's condition. This eliminates the need for subjective manual evaluation, which often leads to inconsistent pricing.

With the damage score established, the adaptive pricing and inventory engine moves to market data and pricing analysis, where it gathers real-time competitor pricing, historical sales data, and demand trends. A machine learning price optimization engine detects that similar Air Jordans in near-new condition are selling for an average of $210, while those with moderate wear are priced around $180. Additionally, the machine learning price optimization engine factors in regional demand data, showing that sales of this model have spiked by 15% in the past two weeks, likely due to a sneaker convention happening in the area. With this data, the machine learning price optimization engine processes the inputs, including the damage score, market fluctuations, and product metadata, to generate an optimized price prediction. The machine learning price optimization engine suggests a listing price of $195, accounting for the wear but ensuring competitiveness based on market conditions. It also provides a confidence score of 90%, indicating high reliability in the pricing recommendation.

The seller receives this recommendation through the seller interaction and recommendation engine, where they can review explainable AI (XAI) insights that justify the price. The seller interaction and recommendation engine highlights that "competitor listings for similar items have a median price of $200, but due to a 12% damage score, a $5 discount was applied to maximize sale potential." It also notes that regional demand is increasing, suggesting that the seller may choose to hold out for a slightly higher price. The seller has the option to accept the recommended price, manually adjust it, or set a dynamic pricing strategy that will automatically adjust the price based on market fluctuations.

Once the seller confirms the listing, the adaptive pricing and inventory engine client ensures that the price is updated in real-time if market conditions change. If the shoes remain unsold for seven days, the adaptive pricing and inventory engine client monitors buyer engagement, tracking clicks, watchlists, and inquiries. If engagement remains high but no purchase occurs, the adaptive pricing and inventory engine suggests maintaining the price. However, if interest declines, it may recommend incremental price reductions to encourage a sale. By leveraging automated condition assessment, real-time market intelligence, and machine learning-driven price optimization, the adaptive pricing and inventory engine allows the seller to make an informed pricing decision with minimal effort, maximizing both profitability and inventory turnover.

### EXAMPLE SYSTEM AND RESOURCES

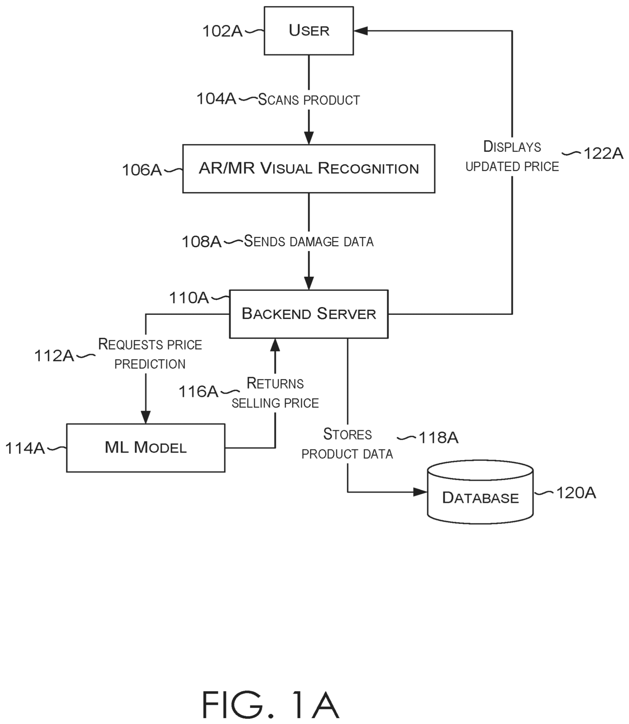

Aspects of the technical solution can be described by way of examples and with reference to FIGS. 1A - 1H. FIGS. 1A - 1H are schematic illustrations of different features and functionality associated with the adaptive pricing and inventory engine to provide adaptive pricing and inventory management in an item listing system.

With reference to FIG. 1A, FIG. 1A is a flow diagram of a structured process for automated pricing optimization and inventory management using AR/MR visual recognition, machine learning-based price prediction, and backend data processing. The workflow begins when user 102A initiates the process by scanning a product, such as a pair of sneakers or a used electronic device, using an AR/MR-enabled device. This action, represented as scans product 104A, allows the adaptive pricing and inventory engine to capture high-resolution images of the product and assess its condition through AR/MR visual recognition 106A. The computer vision system applies damage segmentation algorithms to identify visible imperfections such as scratches, dents, or wear, ensuring an objective evaluation of the product's condition.

Once the product's damage data is extracted, the adaptive pricing and inventory engine proceeds to send damage data 108A to the backend server 110A, where the information is further processed. The backend server 110A supports managing the data flow, ensuring that both condition-based assessments and market data are integrated into the pricing model. At this stage, backend server 110A initiates a request 112A for a price prediction from the machine learning model 114A, which considers the damage score, historical sales data, competitor pricing, and real-time demand fluctuations. The machine learning model 114A processes these inputs, generating a predicted selling price that optimally balances competitiveness and profitability. The result is then returned as selling price 116A to the backend server 110A for storage and further use.

To maintain persistent and accessible records, the backend server 110A stores 118A product data in a database 120A, allowing for future retrieval, analytics, and system learning updates. This stored information ensures that pricing trends can be continuously improved based on historical performance and seller feedback. Finally, the backend server 110A communicates 122A the predicted price to user 102A, enabling the seller to review, accept, or adjust the recommended price based on the provided insights. The seller interface may also display explainable AI (XAI) insights, explaining why the price was suggested, including factors like market trends, condition-based depreciation, and competitor analysis.

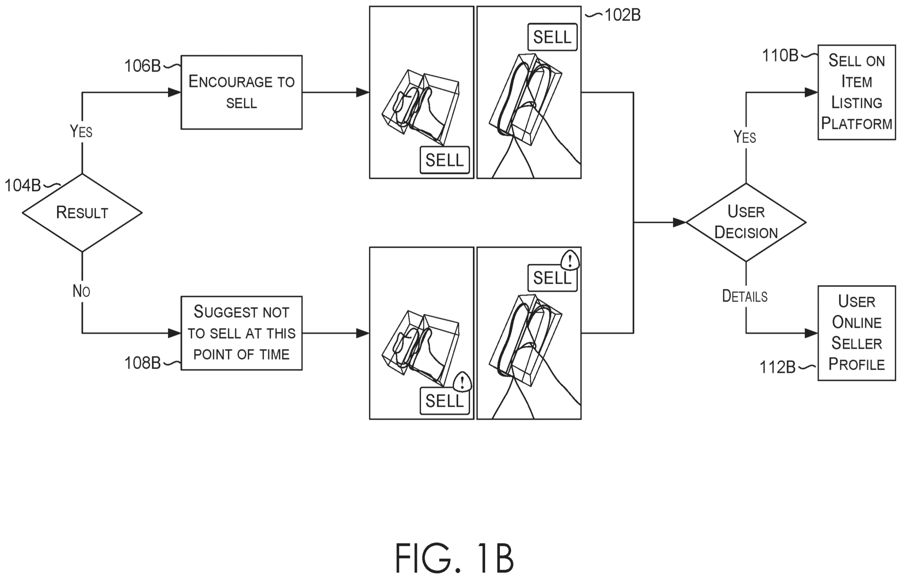

With reference to FIG. 1B, FIG. 1B illustrates an item damage assessment interface 102B that is designed to provide users with a detailed visual representation of an item's condition, allowing for a data-driven decision-making process regarding listing, pricing, and inventory management. The item damage assessment interface 102B provides a guided, interactive workflow that enhances the accuracy and consistency of item condition evaluation. The item damage assessment interface 102B leverages overlay information, which highlights detected damage areas in real-time, allowing users to visually confirm and adjust a computer vision and condition assessment engine's automated assessment. It includes interactive elements that let users capture images dynamically, zoom in on specific regions, and receive instant feedback on the item's condition. The computer vision and condition assessment engine continuously process the captured images using AR/MR visual recognition, updating the damage assessment in real time. If a user disagrees with the computer vision and condition assessment engine's assessment, they can manually adjust the severity of damage, add additional descriptive inputs, or re-capture the image for enhanced accuracy.

For example, if a seller is listing a used designer handbag, they scan the bag using their smartphone's AR-enabled camera. The computer vision and condition assessment engine automatically detect scuff marks on the leather and slight discoloration on the strap, overlaying highlighted areas on the image. The seller receives real-time feedback stating, "Minor wear detected: Surface scuffs and strap discoloration (Damage Score: 8%)". If the seller notices an additional scratch that was not detected, they can use the interactive tools to manually mark the area, increasing the damage score to 12%. This refined assessment is then used to adjust the price recommendation, ensuring that both system-generated and user-verified inputs contribute to an optimized, accurate listing.

The item damage assessment interface 102B can also cause display product data (i.e., result 104B) associated with automated condition analysis, extracted item attributes (such as brand, model, and age), and a quantified damage score. This information enables the user to assess the item's current market potential, helping them determine whether listing the item immediately would be advantageous or if it would be better to delay the sale.

A key feature of the interface is its ability to encourage 106B or discourage 108B a sale at a particular time, based on real-time market conditions, demand trends, and condition-based price evaluations. If market demand is high, the adaptive pricing and inventory engine may highlight that listing now could yield a higher price, whereas if demand is currently low or similar items are oversaturated in the market, the adaptive pricing and inventory engine may suggest holding the item for a better selling opportunity. This functionality is further enhanced by predictive analytics, which estimate future price trends based on seasonal fluctuations, competitor pricing movements, and historical sales data.

After reviewing the item's condition and receiving a sell or hold recommendation, the user can make a final decision to list 110B the item for sale or store 112B it in their item listing system profile. If the user chooses to list, the adaptive pricing and inventory engine automatically integrates the optimized pricing recommendation from the machine learning model and updates the marketplace listing accordingly. If the user decides to store the item, the adaptive pricing and inventory engine retains all product data, condition analysis, and market trends in the user's item listing system profile, ensuring that the information remains accessible for future price adjustments or resale.

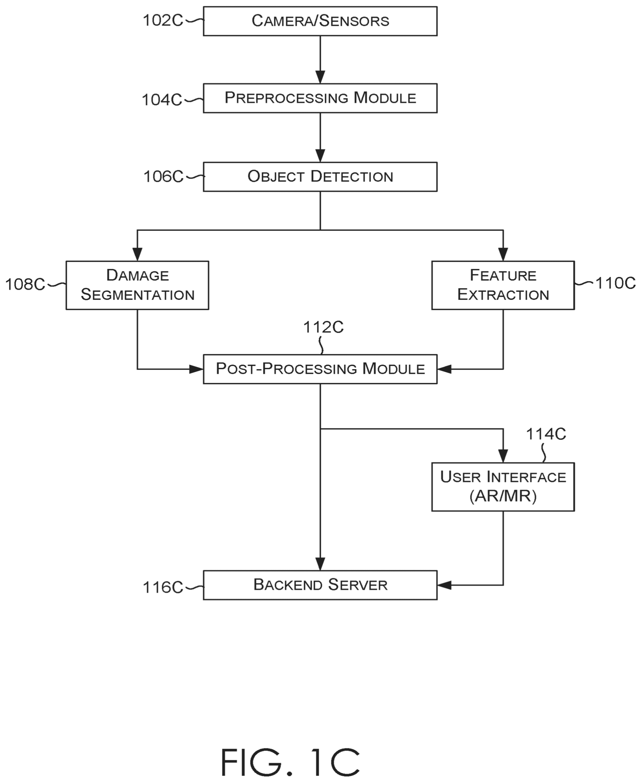

With reference to FIG. 1C, FIG. 1C is a flow diagram of a processing pipeline analyzing an item's condition and generating an optimized pricing recommendation using computer vision, machine learning, and backend processing. The process begins with camera sensors 102C, which capture high-resolution images of the item using AR/MR-enabled devices. These sensors ensure accurate multi-angle imaging, allowing for a comprehensive assessment of the product's physical condition. Once the images are captured, they are sent to the preprocessing 104C, where raw image data is cleaned, adjusted for lighting conditions, and prepared for analysis. This stage eliminates image noise, corrects distortions, and enhances key features to ensure accurate downstream processing.

Following preprocessing, the adaptive pricing and inventory engine moves to object detection 106C, where machine learning algorithms identify the primary product within the image frame and separate it from the background. This ensures that only relevant portions of the image are analyzed, preventing environmental artifacts from influencing condition assessment. Once the item is isolated, the damage segmentation 108C applies image processing algorithms to detect scratches, dents, discoloration, and other imperfections. Using boundary mapping and texture analysis, the adaptive pricing and inventory engine classifies the extent and severity of the damage and assigns a damage score, which quantifies the level of wear and depreciation.

Next, the feature extraction 110C processes the segmented damage data, retrieving item attributes such as material composition, surface texture, and structural integrity. Additionally, it extracts metadata such as brand, model, and age from product databases, ensuring that condition analysis is contextualized within its specific category. This structured data is then sent to the post-processing 112C, where additional refinements are applied, including validating detected damage against known wear patterns, normalizing damage scores, and ensuring that pricing adjustments align with item-specific depreciation trends.

The adaptive pricing and inventory engine then optionally transitions to user interaction 114C, where the processed data is presented in a visual, interactive interface that outlines detected damage areas and provides an explainable assessment of the item's condition. The seller can review the analysis, confirm detected damage, or make manual adjustments to improve listing accuracy. Once the user finalizes the assessment, the structured data is sent to the backend server 116C, where it is stored, analyzed for market positioning, and integrated into the machine learning price prediction model. The backend server 116C ensures seamless communication between condition assessment, market analysis, and price optimization, providing a streamlined and automated pricing process that maximizes accuracy and profitability.

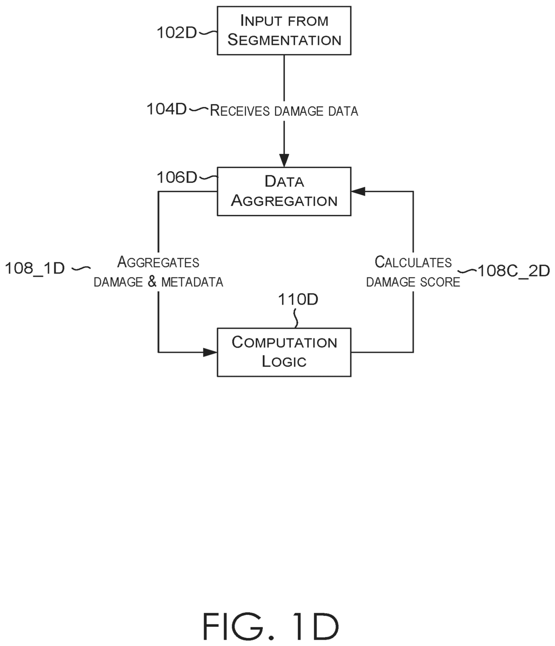

With reference to FIG. 1D, FIG. 1D is a flow diagram of a data processing pipeline for analyzing item damage, computing a damage score, and integrating this information into the pricing optimization system. The process starts with input segmentation 102D, where raw image data from the AR/MR visual recognition system is processed to isolate relevant portions of the item. This step ensures that only the item and its potential damage areas are analyzed, eliminating background noise and irrelevant image artifacts. Segmentation techniques such as edge detection, texture analysis, and pattern recognition help distinguish between normal wear and significant damage, ensuring precise classification.

Once the item is segmented, the adaptive pricing and inventory engine communicates 104D the damage data to the backend processing system. This step ensures that the detected damage, along with any user-provided condition information, is transferred for further analysis. The damage data is then sent to the data aggregation 106D, where multiple data sources are combined to provide a comprehensive product condition overview. Data aggregation 106D integrates damage segmentation results, product metadata (such as brand, model, and age), historical pricing data, and real-time market trends to contextualize the item's condition.

Operationally, the adaptive pricing and inventory engine executes aggregate damage and metadata 108_1D, where it consolidates all available product information to build a structured dataset for damage assessment. The next step, calculate damage score 108_2D, applies machine learning-based scoring models that quantify the severity of damage in relation to the item's expected depreciation. Using computation logic 110D, the adaptive pricing and inventory engine applies damage weightings based on factors such as scratch depth, discoloration intensity, and surface impact severity, ensuring that the damage score reflects the true impact on the item's resale value.

For example, a pair of used sneakers with minor scuff marks and some creasing may receive a damage score of 10%, indicating light wear with minimal impact on price. However, if the same sneakers have significant sole wear, deep scratches, or faded colors, the adaptive pricing and inventory engine may assign a damage score of 40%, reflecting a more substantial decrease in value. This computed damage score then becomes a key input for price optimization, influencing whether the item should be listed at a standard price, adjusted for quick sale, or held for a more favorable market condition.

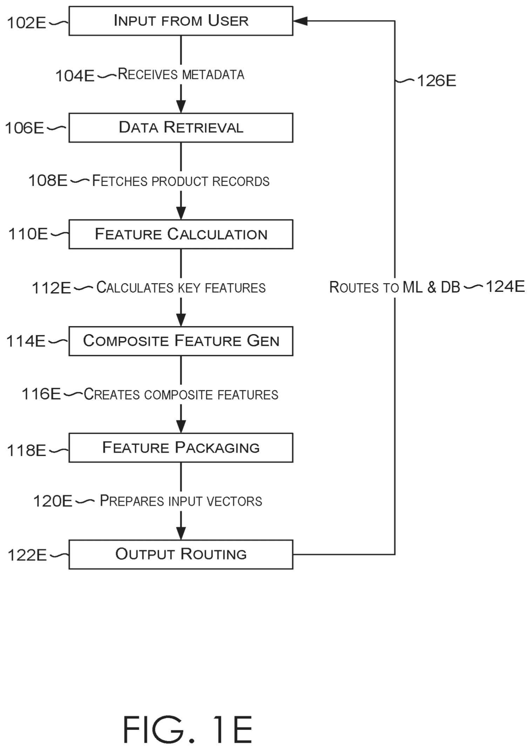

With reference to FIG. 1E, FIG. 1E is a flow diagram of a feature extraction and machine learning processing pipeline, which transforms user-provided metadata and system-generated damage assessments into structured inputs for pricing prediction. The process begins with input from user 102E, where the seller provides item-specific details, such as product type, brand, model, and optional condition descriptors, through an interactive interface. This input is then communicated 104E as metadata to data retrieval 106E, where the backend system gathers additional contextual information necessary for price prediction.

Once the metadata is received, the adaptive pricing and inventory engine proceeds to fetch 108E product records, retrieving relevant historical data such as previous sale prices, competitor listings, and market demand trends. This ensures that the pricing analysis is not only based on the item's current condition but also on historical and real-time market behavior. The feature calculation 110E then processes this data to extract essential pricing factors. Within this stage, the adaptive pricing and inventory engine calculates 112E key features, such as product age, damage-to-value ratio, brand desirability, and market liquidity, which are essential for determining an optimal price.

Following feature calculation, the adaptive pricing and inventory engine moves into composite feature generation 114E, where multiple independent features are combined to create enhanced predictive indicators. The adaptive pricing and inventory engine creates 116E composite features step ensures that attributes such as brand popularity adjusted for condition, depreciation-adjusted market demand, and supply-driven price fluctuation sensitivity are integrated into the predictive model. These advanced features help refine the machine learning model's understanding of how condition, demand, and market competition influence pricing.

Once the composite features are generated, the feature packaging 118E standardizes and structures them into a usable format for model processing. The adaptive pricing and inventory engine prepares 120E input vectors step converts the raw and composite features into numerical vectors, ensuring compatibility with the machine learning price prediction engine. These input vectors are then routed via output routing 122E to be processed by the machine learning model 124E. The ML model evaluates the feature inputs, applies learned pricing patterns, and generates an optimized predicted price, which is then communicated 126E back to the user 102E.

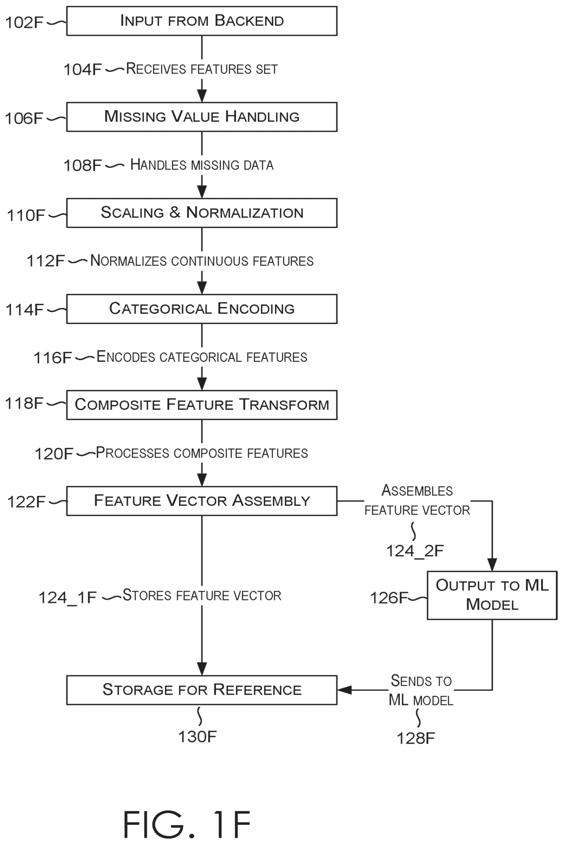

With reference to FIG. 1F, FIG. 1F is a flow diagram of a preprocessing pipeline that transforms raw feature data into structured input vectors for machine learning-based price prediction. The process begins with input from backend 102F, where the adaptive pricing and inventory engine retrieves relevant structured and unstructured data, including product metadata, damage assessment results, and real-time market insights. The adaptive pricing and inventory engine then receives 104F the feature set, consisting of both raw numerical attributes (e.g., product age, damage score) and categorical attributes (e.g., brand, product category), which require further processing before being fed into the pricing model.

Since incoming data can often contain incomplete or inconsistent values, the missing value handling 106F is activated. This missing value handling 106F handles 108F missing data by applying statistical imputation techniques, such as mean substitution for continuous values and mode-based filling for categorical values. If a key attribute such as market demand trend data is missing, the adaptive pricing and inventory engine may use predictive inference based on historical sales patterns and regional buyer preferences to estimate a reasonable approximation.

Once missing data is addressed, the scaling and normalization 110F processes numerical inputs to ensure they are standardized across a uniform scale, preventing bias in the machine learning model. This step normalizes 112F continuous features, such as damage score, product age, and competitor price deviations, by applying min-max scaling or z-score normalization, making them comparable across different product categories and pricing models.

For categorical data, the adaptive pricing and inventory engine applies categorical encoding 114F, where it encodes 116F categorical features such as brand, product type, and seller-defined listing preferences. Common encoding techniques such as one-hot encoding and label encoding ensure that non-numeric data is transformed into a machine-readable format. For example, a sneaker brand like Nike might be encoded as "1", while Adidas is represented as "2", allowing the model to recognize brand-based pricing trends.

Next, the composite feature transform 118F processes higher-order feature relationships, extracting additional insights from individual attributes. During process 120F composite features, the adaptive pricing and inventory engine may calculate damage-to-age ratio, brand popularity adjusted for condition, and seasonal demand multipliers, allowing the model to learn complex interactions that impact pricing.

Once all feature transformations are complete, the adaptive pricing and inventory engine performs feature vector assembly 122F, where processed data is structured into a single, optimized feature vector. This includes storing 124_1F the feature vector for tracking and assembling 124_2F a fully formatted input vector, ensuring that all pricing factors are aligned and structured for model processing.

The final step involves outputting the feature vector to the ML model 126F, where the assembled feature vector is sent 128F to the machine learning price prediction engine for analysis. Additionally, for long-term optimization, the adaptive pricing and inventory engine includes storage for reference 130F, where feature vectors are archived for future model training and retraining purposes, ensuring that the pricing model continuously improves over time based on real-world market performance and seller engagement data.

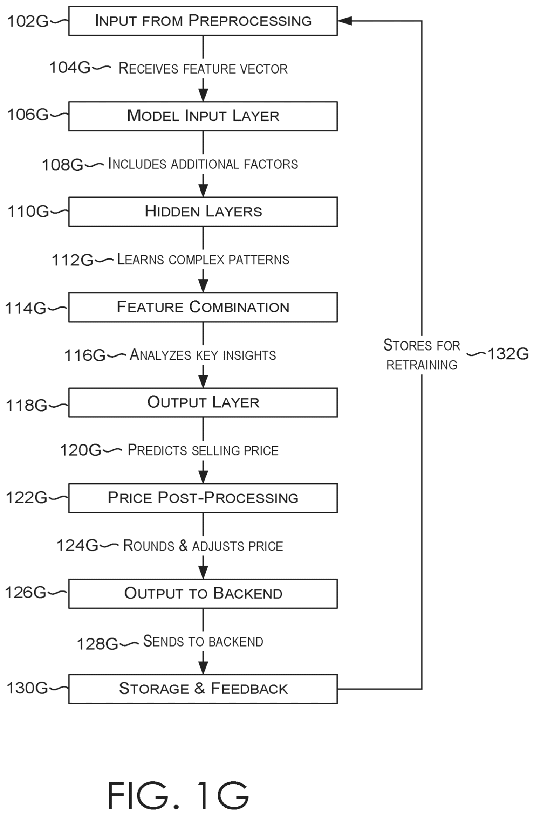

With reference to FIG. 1G, FIG. 1G is a flow diagram of a machine learning price prediction pipeline, where structured feature vectors are processed through an advanced neural network-based pricing model to generate an optimized selling price. The process begins with input from processing 102G, where the adaptive pricing and inventory engine receives fully preprocessed and structured data, including normalized numerical features, encoded categorical attributes, and composite pricing factors. Once this data is prepared, the adaptive pricing and inventory engine receives 104G the feature vector, ensuring that all pricing-relevant attributes are properly formatted for analysis.

The model input layer 106G initializes the machine learning model by incorporating the feature vector into the prediction framework. At this stage, the adaptive pricing and inventory engine includes 108G additional factors, such as current market trends, competitor pricing adjustments, seasonal demand influences, and economic indicators, allowing the model to capture dynamic pricing relationships beyond just the item's condition and metadata.

Once the data is structured, it is processed through hidden layers 110G, where the model learns 112G complex patterns using advanced deep learning techniques such as multi-layer perceptrons (MLPs), gradient-boosted decision trees (GBDTs), or transformer-based architectures. These layers enable the model to analyze non-linear relationships between pricing variables, such as how a high-demand item with slight wear might still command a strong price due to brand recognition.

During feature combination 114G, the adaptive pricing and inventory engine identifies and analyzes 116G key insights, determining which attributes most significantly impact pricing decisions. For example, the model might learn that a product's brand and condition are more critical than its age for certain high-demand items, while in other cases, age-based depreciation might be the dominant pricing factor.

After extracting key insights, the model processes data through its output layer 118G, where it predicts 120G the optimal selling price based on all evaluated factors. The resulting price is then refined through price post-processing 122G, where additional business logic adjustments, pricing rules, and market compliance checks are applied. The adaptive pricing and inventory engine then rounds and adjusts 124G the predicted price, ensuring that it aligns with seller-defined preferences, platform-specific pricing constraints, and user experience optimizations. For example, a predicted price of $198.67 might be rounded to $199 for better market appeal.

Once the optimized price is finalized, it is output to the backend 126G, where the adaptive pricing and inventory engine sends 128G the predicted price to the backend server, ensuring that it is properly stored and made available for user interaction. Additionally, the adaptive pricing and inventory engine includes storage and feedback 130G, where pricing performance data-such as actual sale price, listing duration, and buyer engagement metrics-is tracked and archived. This allows the adaptive pricing and inventory engine to store 132G key data for retraining, continuously improving its pricing predictions based on real-world outcomes.

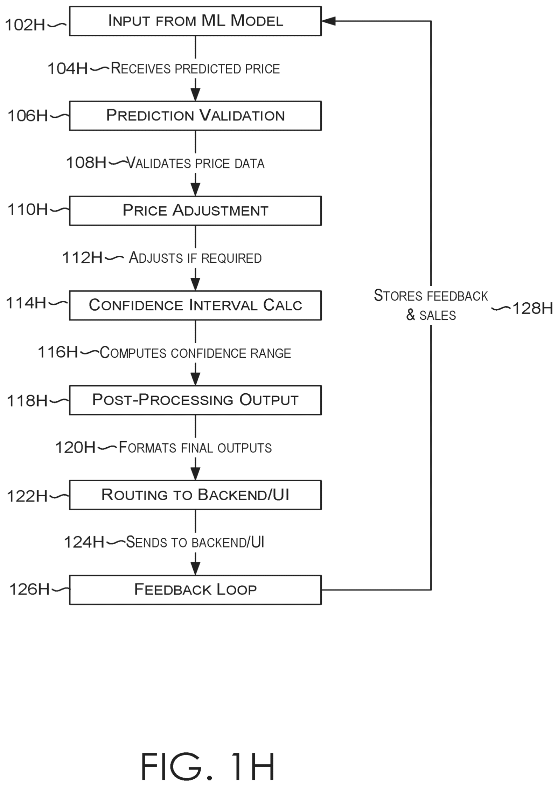

With reference to FIG. 1H, FIG. 1H is a flow diagram of a post-processing and validation pipeline for refining predicted prices before finalizing them for seller interaction and continuous system improvement. The process begins with input from the ML model 102H, where the adaptive pricing and inventory engine receives 104H the predicted prices generated by the machine learning price prediction engine. These predicted prices represent the adaptive pricing and inventory engine's optimized valuation of the item based on damage assessment, market trends, competitor pricing, and demand fluctuations.

Before the price is finalized, the prediction validation 106H is activated to validate 108H price data for consistency, regulatory compliance, and market competitiveness. This ensures that the suggested price aligns with real-world conditions and does not violate platform-specific price limits, seller-defined constraints, or economic thresholds. If the validation step identifies potential discrepancies, such as an outlier price that is too high or too low compared to market norms, the adaptive pricing and inventory engine triggers price adjustment 110H, where it adjusts 112H the price if required. Adjustments may be necessary if recent market fluctuations or real-time demand shifts indicate that an alternative price would be more effective for maximizing sales.

To further refine pricing accuracy, the adaptive pricing and inventory engine calculates confidence intervals 114H, a statistical measure that computes 116H a confidence range around the predicted price. This step ensures that sellers understand the pricing flexibility and expected market response. For example, if an item has low historical pricing variability, the system might generate a narrow confidence range (e.g., $185 ± $5), indicating a high certainty that the item will sell within that range. In contrast, for items with high demand volatility, the system may suggest a wider confidence range (e.g., $175-$210) to account for market fluctuations.

Once confidence calculations are complete, the post-processing output 118H ensures that the final price recommendation is formatted properly for display. The adaptive pricing and inventory engine then formats 120H the final output, ensuring it meets marketplace standards and is optimized for clear presentation in the seller's interface. The formatted pricing recommendation is then routed 122H to the backend UI, where the adaptive pricing and inventory engine sends 124H the data to the user interface for seller interaction.

To enhance long-term accuracy and pricing intelligence, the adaptive pricing and inventory engine incorporates a feedback loop 126H, where it stores 128H feedback and sales performance data. This feedback loop continuously monitors real-world sale outcomes, capturing data such as actual selling price, time to sale, buyer engagement, and price adjustment trends. By feeding this data back into the machine learning retraining process, the adaptive pricing and inventory engine ensures that future price predictions become more accurate and adaptive over time. For instance, if a particular brand of electronics consistently sells for 5% higher than predicted, the model will learn to adjust future price recommendations accordingly.

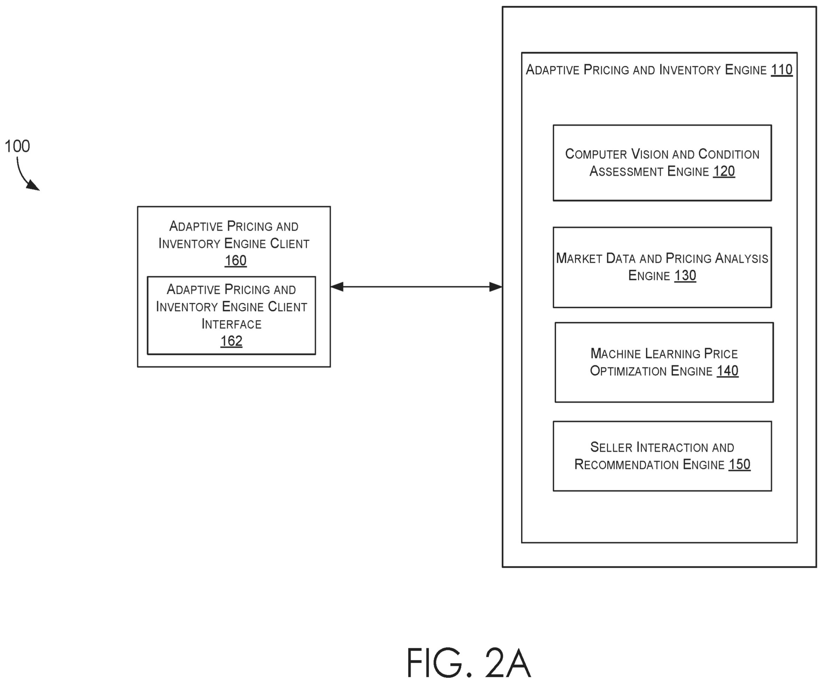

With reference to FIG. 2A, FIG. 2A a cloud computing system 100 (e.g., item listing system), adaptive pricing and inventory engine 110, computer vision and condition assessment engine 120, market data and pricing analysis engine 130, machine learning price optimization engine 140, seller interaction and recommendation engine 150, adaptive pricing and inventory engine client 160, adaptive pricing and inventory engine client interface 162

The cloud computing system 100 serves as the foundational infrastructure that offers scalable and flexible resources to host and manage all system components. The adaptive pricing and inventory engine 110 is the central orchestrator, integrating AR/MR (Augmented Reality/Mixed Reality) technologies, machine learning (ML), and automating data processing to optimize pricing and inventory management. In particular, the adaptive pricing and inventory engine 110 integrates multiple interdependent components to automate pricing optimization and inventory management by leveraging real-time market data and product condition assessments.

Computer vision and condition assessment engine 120 captures and processes high-resolution images of an item using Augmented Reality (AR) or Mixed Reality (MR) visual recognition technology. Computer vision and condition assessment engine 120 isolates damaged areas using advanced image processing and segmentation techniques, extracting relevant features such as wear patterns, material degradation, and age indicators. A damage score is computed to quantify the severity of the item's condition, ensuring a standardized metric that influences pricing decisions.

Once the item's condition is assessed, market data and pricing analysis engine 130 is responsible for aggregating and analyzing real-time pricing data from multiple sources, including competitor listings, historical sales data, and regional demand trends. Market data and pricing analysis engine 130 applies time-series analysis to identify seasonal fluctuations and market shifts, ensuring that pricing recommendations remain competitive. It also normalizes external influences, such as shifts in consumer behavior and supply chain constraints, allowing for a dynamic pricing framework that is responsive to real-world conditions.

With both the damage score and market analysis in place, the machine learning price optimization engine 140 processes these inputs to generate an optimized price prediction. Using supervised learning models, including regression and neural networks, machine learning price optimization engine 140 detects pricing patterns and adjusts for variables such as item depreciation, damage severity, and demand elasticity. The pricing model continuously learns from post-sale performance and updated market conditions, ensuring that predictions remain accurate over time. Additionally, confidence intervals are applied to quantify the reliability of the pricing estimate, while explainable AI (XAI) insights provide sellers with a clear rationale for how the price was determined.

Machine learning price optimization engine 140 supports synchronizes pricing updates across online marketplaces, tracking inventory performance and making dynamic adjustments as needed. The machine learning price optimization engine incorporates one or more specialized models that are specifically trained using historical data from the item listing system, with a strong emphasis on pricing and sale trends for damaged items. Unlike conventional pricing models that primarily rely on static price comparisons or general depreciation curves, these models leverage a unique combination of historical sales performance, damage-based price sensitivity, and real-time market fluctuations to optimize pricing in a way that dynamically adapts to the condition of each individual item.

A key aspect of the model's novelty lies in its deep integration of damage-specific historical sales data, enabling it to learn nuanced price adjustments based on varying levels of wear and condition-related depreciation. Traditional pricing models often fail to differentiate between new, lightly used, and heavily damaged items beyond broad categorization, leading to inefficient pricing that either undervalues lightly damaged items or fails to properly discount severely damaged ones. The trained models in this adaptive pricing and inventory engine, however, are designed to recognize and quantify the impact of different damage types, such as cosmetic flaws, structural damage, or functional impairments, and incorporate this information into the pricing decision.

Another aspect of these models is their ability to continuously improve pricing predictions using a feedback-driven approach. The historical data training set is not static; rather, it is continuously updated with real-time sales outcomes, ensuring that the model learns from actual listing performances, buyer engagement metrics, and market trends. If, for example, a particular brand of refurbished electronics with minor scratches consistently sells within 5% of the predicted price, but items with screen cracks tend to be undervalued, the model adjusts future pricing recommendations accordingly. This creates a self-optimizing pricing engine that continuously refines its predictions for better market alignment.

Moreover, the machine learning price optimization engine 140 integrates comparative condition-based pricing across multiple categories, meaning that the model is trained to detect patterns not only within a single product type but also across different categories where similar damage patterns may affect pricing similarly. For instance, if minor scuffs on high-end sneakers result in a 10% price reduction, the model may infer similar pricing behavior for designer handbags with similar surface wear. This cross-category learning approach ensures that pricing insights are transferable and adaptable, making the model particularly effective for large-scale marketplaces with diverse product offerings.

This machine learning price optimization engine 140 continuously monitors listing engagement, detecting fluctuations in demand and recommending repricing strategies accordingly. If an item remains unsold for a prolonged period, the system may suggest a gradual price reduction or alternative marketing strategies to improve visibility. By combining damage-specific historical pricing data, continuous learning through real-time sales feedback, and cross-category pricing generalization, the machine learning price optimization engine 140 achieves a level of precision and adaptability that traditional static pricing models lack. This innovation ensures that pricing remains competitive, condition-aware, and dynamically responsive, allowing sellers to maximize profitability while maintaining realistic price expectations for damaged items in fast-changing market conditions.

The optimized price is then communicated through the seller interaction and recommendation engine 150, which serves as the primary interface for sellers to receive pricing recommendations and market insights. Seller interaction and recommendation engine 150 provides an interactive dashboard displaying predicted prices alongside relevant factors such as market competition, historical trends, and buyer demand signals. Sellers receive suggested actions, including whether to list immediately, adjust the price based on demand trends, or hold the inventory for future pricing advantages. The seller interaction and recommendation engine 150 also allows for customized pricing strategies, such as offering discounts to accelerate sales or setting premium pricing in high-demand periods.

The adaptive pricing and inventory engine client 160 functions as a user client that operates within the broader system, facilitating the interaction between sellers and the pricing optimization framework. It acts as an intermediary that ensures seamless communication between the pricing engines and the seller's workflow, enabling dynamic updates, inventory tracking, and real-time pricing adjustments. Adaptive pricing and inventory engine client 160 continuously interacts with backend pricing models, retrieving optimized price recommendations, monitoring market conditions, and ensuring that sellers receive up-to-date insights on product value and competitive positioning.

To support seller engagement, the adaptive pricing and inventory engine client 160 provides access to the adaptive pricing and inventory engine client interface 162, which serves as the primary user-facing component. Through this interface, sellers can view and manage pricing recommendations, analyze market data, and interact with predictive insights. The adaptive pricing and inventory engine client interface162 presents a structured display of key performance metrics, such as listing engagement, real-time demand fluctuations, and pricing confidence scores. It allows sellers to make informed decisions by offering interactive controls, such as the ability to adjust pricing strategies, apply discounts, or set premium pricing based on system recommendations.

In addition to displaying predictive insights, the adaptive pricing and inventory engine client interface 162 supports manual overrides and custom pricing preferences, ensuring that sellers can adapt pricing strategies according to their unique business goals. It integrates seamlessly with marketplace platforms, updating listings dynamically to reflect optimal pricing adjustments based on current demand and competition. By continuously syncing with market conditions and sales performance data, the adaptive pricing and inventory engine client 160 ensures that pricing remains competitive while optimizing inventory turnover. This integration enhances the efficiency of the overall pricing system, empowering sellers with data-driven decision-making capabilities while maintaining flexibility for customized pricing strategies.

For clarity and efficient reference, a glossary of key terms and concepts pertinent to the technical solution is provided below.

The adaptive pricing and inventory engine supports dynamically adjusts product pricing and inventory strategies based on real-time market data, product condition assessments, and machine learning predictions. It continuously analyzes factors such as demand fluctuations, competitor pricing, historical sales trends, and item-specific attributes (e.g., damage score, age, brand) to generate optimized pricing recommendations. By integrating with marketplace platforms, it enables automated price updates, inventory tracking, and seller insights, ensuring maximum profitability and efficient turnover of listed items.

Machine Learning Price Optimization Engine - A machine learning engine that uses machine learning models to analyze product condition, market trends, and historical pricing data to generate an optimized selling price.

Damage Score - A numerical value that quantifies the severity of an item's condition based on computer vision and segmentation analysis, ensuring an objective measure of depreciation.

AR/MR Visual Recognition Engine - A computer vision-based system that captures images using Augmented Reality (AR) or Mixed Reality (MR) technology, enabling real-time segmentation and damage assessment.

Dynamic Pricing Analysis Data - A dataset that includes real-time market demand, competitor pricing, historical sales, and buyer preferences, allowing the system to determine pricing strategies dynamically.

Predicted Price Generation - The process of computing an optimal price based on the damage score, pricing analysis data, and machine learning model outputs.

Market Data and Pricing Analysis Engine - A component that collects real-time pricing data, competitor listings, and demand fluctuations, ensuring that price optimization is market-responsive.

Feature Extraction - A process that identifies and structures key item attributes (e.g., condition, age, material, and brand) to be used as inputs for machine learning price prediction.

Real-Time Market Demand and Supply Trends - The continuously updated market insights that influence the price optimization process, ensuring that product pricing is aligned with competitive and seasonal trends.

Feature Preprocessing - A step in the machine learning pipeline that normalizes continuous variables, encodes categorical data, and computes composite features, making raw data usable for price prediction.

Adaptive Pricing and Inventory Engine Client - A user-facing client application that interacts with the pricing optimization system, retrieving recommended prices and updating item listings in real time.

Post-Processing Engine - A validation step that refines and adjusts predicted prices, ensuring compliance with regulatory constraints and confidence interval adjustments.

Explainable AI (XAI) for Price Insights - A framework that interprets machine learning model outputs, providing sellers with clear explanations of why a particular price was suggested.

Seller Interaction and Recommendation Engine - A system that delivers pricing insights and recommendations to the seller, providing interactive options such as price adjustments and promotional strategies.

Inventory Turnover Optimization - A strategy that uses dynamic pricing adjustments to minimize the time an item remains unsold, maximizing profit and efficiency.

Automated Damage Quantification - The use of image processing algorithms to assign a damage severity score automatically, replacing subjective human assessments.

Time-Series Analysis for Pricing Trends - A technique that analyzes historical price fluctuations over time, helping predict future demand and seasonal pricing trends.

Real-Time Data Integration - The process of continuously updating pricing models and recommendations based on new market data and competitor price changes.

Competitive Pricing Assessment - The evaluation of current and historical competitor prices, ensuring that optimized pricing remains competitive while maximizing profitability.

Seller User Interface Interaction Model - The front-end experience allowing sellers to interact with pricing recommendations, market insights, and inventory updates.

Market Trend Display on Interface - A dashboard visualization that provides sellers with insights into competitor pricing, demand forecasts, and buyer engagement trends.

Item Listing Workflow - The structured process that automates item listing and price updates, ensuring seamless integration with marketplace platforms.

Updating Interface Elements for Adaptive Pricing - A real-time mechanism that adjusts pricing elements dynamically, ensuring sellers always have access to the most accurate and optimized prices.

Item Damage Assessment Interface - A seller-facing tool that visually highlights damage regions detected by AR/MR, providing an intuitive way to understand the assigned damage score.

Suggested Action for Item Listing - System-generated recommendations that suggest whether to list, reprice, or hold an item based on market demand and competitive positioning.

Causing Display of a Predicted Price - The function of rendering real-time price recommendations on seller dashboards, ensuring immediate price visibility and decision-making.

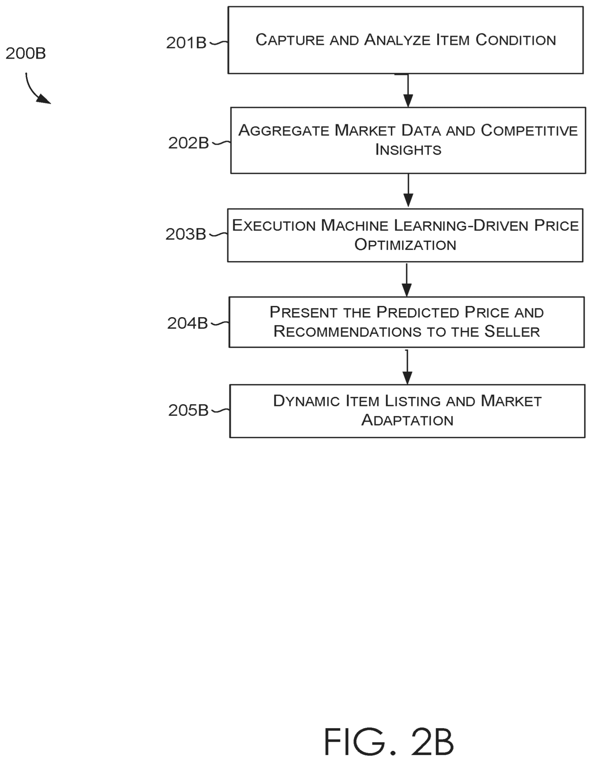

With reference to FIG. 2B, FIG. 2B, illustrates a schematic 200B associated with providing an adaptive pricing and inventory engine in accordance with embodiments described herein. The technical solution of the adaptive pricing and inventory engine can be explained by way of steps.

At step 201B: Capturing and Analyzing Item Condition - The process begins with image capture using an Augmented Reality (AR) or Mixed Reality (MR) visual recognition engine. The seller scans the item using a compatible device, allowing the system to capture multiple angles and details in real-time. The computer vision and condition assessment engine then process the images, identifying and segmenting any visible damage using advanced image processing and segmentation techniques. The system quantifies these damages by generating a damage score, which serves as a standardized measure of the item's condition. Additional feature extraction processes retrieve key item attributes such as age, material, wear patterns, and branding, ensuring a complete dataset for price evaluation.

At step 202B: Aggregating Market Data and Competitive Insights - Once the item's condition is assessed, the market data and pricing analysis engine retrieves and integrates real-time market data, including current demand, supply trends, historical sales data, and competitor pricing. This market data and pricing analysis engine uses time-series analysis to determine seasonal fluctuations, regional pricing variations, and ongoing shifts in consumer interest. The collected data is then matched against the item's condition and category, allowing the system to contextualize the price in relation to the broader market landscape. This step ensures that pricing decisions are not only based on damage assessment but also on real-world economic conditions and competitive benchmarks.

At step 203B: Machine Learning-Driven Price Optimization - With both item-specific condition data and real-time market trends available, the machine learning price optimization engine executes the pricing prediction model. Using supervised learning techniques and regression models, the engine processes the input data-damage score, product age, competitive pricing benchmarks, and demand forecasts-to generate an optimized predicted price. The model is designed to continuously learn and adapt, incorporating historical performance data, real-time market signals, and user feedback to refine its pricing accuracy over time. A post-processing engine validates the output, ensuring compliance with pricing regulations and applying confidence interval calculations to account for market volatility. The system also generates an explainable AI (XAI) insight, detailing why the suggested price was chosen, including damage impact, market positioning, and comparative analysis.

At step 204B: Presenting the Predicted Price and Recommendations to the Seller - The seller interaction and recommendation engine takes the optimized price and prepares it for user presentation. The seller interface displays the predicted price along with relevant insights, such as market trends, competitive pricing comparisons, and demand forecasts. If applicable, the system suggests alternative pricing strategies, such as discounting for quick sales or holding inventory based on anticipated demand increases. Sellers receive visual indicators and interactive elements, such as adjustable sliders or confidence score breakdowns, allowing them to make informed pricing decisions before listing the item.

At step 205B: Dynamic Item Listing and Market Adaptation - Upon seller confirmation, the system automatically updates the item listing on integrated e-commerce or resale platforms, ensuring real-time synchronization with the market. The adaptive pricing and inventory engine continuously monitors item performance post-listing, detecting shifts in demand or price fluctuations. If significant changes occur, the system can notify the seller with suggested pricing adjustments, maintaining competitiveness in a rapidly changing marketplace. Additionally, post-sale data and buyer behavior metrics are fed back into the machine learning model, enhancing future pricing predictions.

This structured implementation ensures that pricing decisions are dynamic, data-driven, and optimized for real-world conditions, allowing sellers to maximize profitability while ensuring an efficient and competitive listing process.

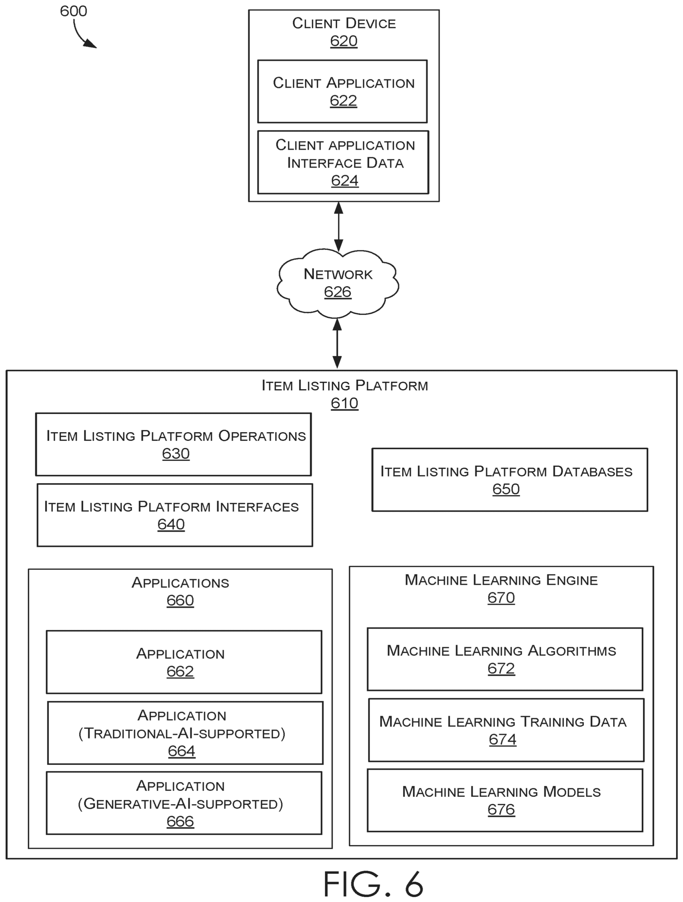

Aspects of the technical solution can be described by way of examples and with reference to FIGS. 1A - 1F, 2A, and 2B. FIG. 2A is a block diagram of an exemplary technical solution environment, based on example environments described with reference to FIGS. 6, 7, and 8 for use in implementing embodiments of the technical solution are shown. Generally, the technical solution environment includes a technical solution system suitable for providing the example item listing system 600 in which methods of the present disclosure may be employed. In particular, FIG 2A shows a high-level architecture of the cloud computing system 100 in accordance with implementations of the present disclosure. Among other engines, managers, generators, selectors, or components not shown (collectively referred to herein as "components"), the cloud computing system 100 of FIG. 2A support functionality described in FIGS. 1A - 1F.

### Example Methods

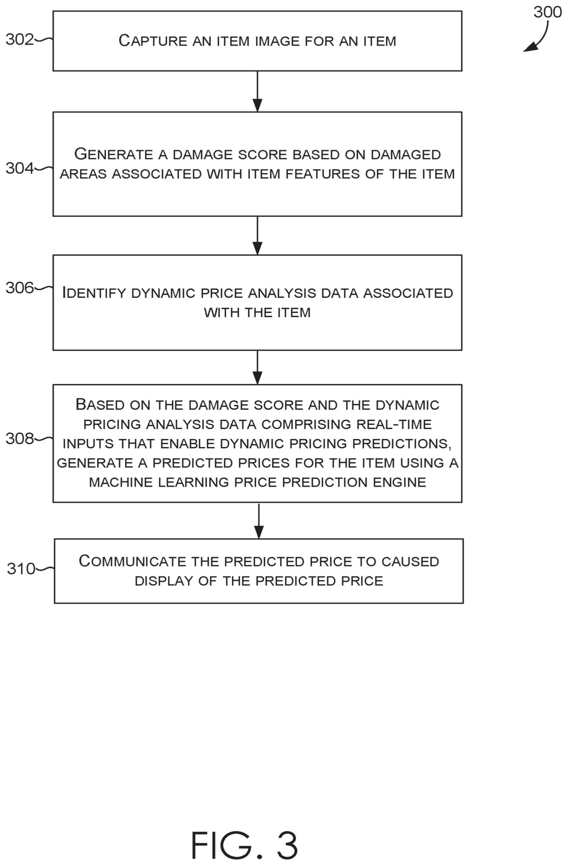

With reference to FIGS. 3, 4, and 5 flow diagrams that illustrate methods for providing an adaptive pricing and inventory engine in an item listing system. The methods may be performed using the item listing system described herein. In embodiments, one or more computer-storage media having computer-executable or computer-useable instructions embodied thereon that, when executed, by one or more processors can cause the one or more processors to perform the methods (e.g., computer-implemented method) in an item listing system (e.g., computerized system or computer system).

Turning to FIG. 3, a flow diagram is provided that illustrates a method 300 for providing an adaptive pricing and inventory engine in an item listing system. At block 302, capture an item image for an item. At block 304, generate a damage score based on damaged areas associated with item features of the item. At block 306, identify dynamic price analysis data associated with the item. At block 308, based on the damage score and the dynamic price analysis data comprising real-time inputs that enable dynamic pricing predictions, generate a predicted price for the item using a machine learning price prediction engine. At block 310, communicate the predicted price to cause display of the predicted price.

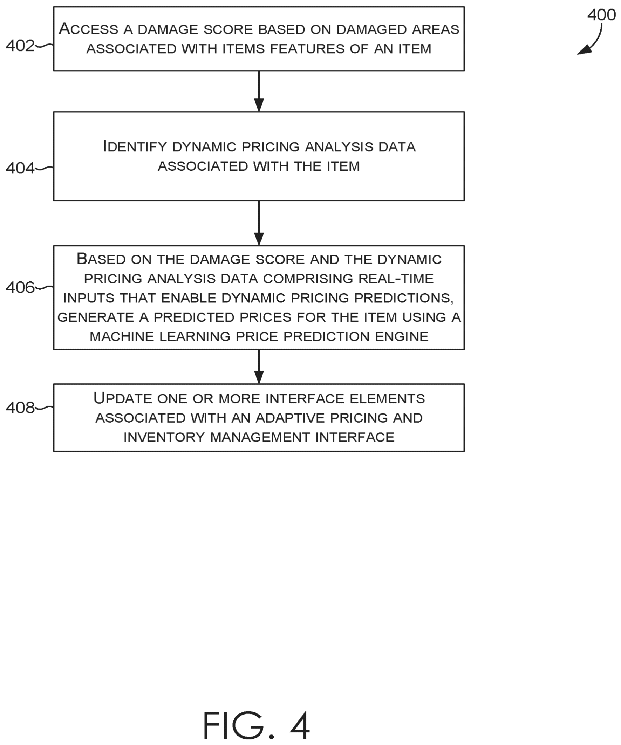

Turning to FIG. 4, a flow diagram is provided that illustrates a method 400 for providing an adaptive pricing and inventory engine in an item listing system. At block 402, access a damage score based on damage areas associated with item features of an item. At block 404, identify dynamic price analysis data associated with the item. At block 406, based on the damage score and the dynamic price analysis data comprising real-time inputs that enable dynamic pricing predictions, generate a predicted price for the item using a machine learning price prediction engine, the machine learning price prediction engine enables price optimization by incorporating the damage score as a quantitative measure of a condition of the item. At block 408, update one or more interface elements associated with an adaptive pricing and inventory management interface.

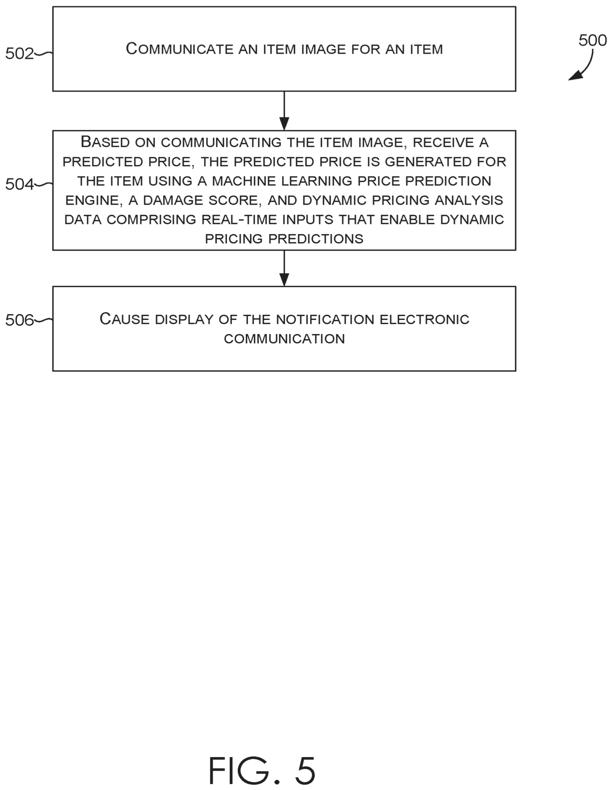

Turning to FIG. 5, a flow diagram is provided that illustrates a method 500 for providing an adaptive pricing and inventory engine in an item listing system. At block 502, communicate an item image for an item. At block 504, based on communicating the item image, receive a predicted price, the predicted price is generated for the item using a machine learning price prediction engine, a damage score, and dynamic pricing analysis data comprising real-time inputs that enable dynamic pricing predictions. At block 506, cause display of the predicted price.

### Technical Improvement

Embodiments of the present invention have been described with reference to several inventive features (e.g., operations, systems, engines, and components) associated with an item listing system. Inventive features described include operations, interfaces, data structures, and arrangements of computing resources associated with providing the functionality described herein relative with reference to an adaptive pricing and inventory engine associated with an item listing system.

Embodiments of the present invention relate to the field of computing, and more particularly to an item listing system. The following described exemplary embodiments provide a system, method, and program product to, among other things, execute generative item listing operations that provide an adaptive pricing and inventory engine. Therefore, the present embodiments improve the technical field of item listing technology enhancing the efficiency and effectiveness item listing system.

The technical solution enables intelligent and dynamic pricing optimization by integrating real-time condition assessment and market-driven pricing adjustments. It begins with AR/MR visual recognition, which scans items, segments damaged areas, and extracts condition-related features. Machine learning then analyzes the image data to generate a damage score, ensuring an objective assessment for price adjustments. The system aggregates market data, including competitor pricing, historical sales, and buyer demand, to inform dynamic pricing decisions. The machine learning price prediction engine processes these inputs to generate an optimized price recommendation, which is presented through an interactive seller interface. Sellers can manually adjust or automate pricing updates, while the system continuously updates marketplace listings in real time to maintain competitive pricing based on evolving demand and inventory conditions.

Advantageously, the technical solution introduces improvements over conventional item listing systems. The adaptive pricing and inventory engine enables automated condition-based pricing through AR/MR imaging and machine learning, eliminating the need for manual, subjective condition assessments. Traditional pricing methods often rely on user-reported condition descriptions, leading to inconsistencies, whereas this solution standardizes condition evaluation using computer vision and AI-driven segmentation techniques. The adaptive pricing and inventory engine integrates real-time market data with condition-based pricing, addressing a critical gap in conventional dynamic pricing models that typically rely only on supply-and-demand trends without factoring in individual product condition. By combining market-driven pricing insights with an AI-generated damage score, the system ensures more precise and fair valuations for used or damaged items.

Functionality of the embodiments of the present invention have further been described, by way of an implementation and anecdotal examples - to demonstrate that the operations for providing dynamic item listing using an adaptive pricing and inventory engine in an item listing system as a solution to a specific problem in item listing technology to improve computing operations in item listing systems. Overall, these improvements result in less CPU computation, smaller memory requirements, and increased flexibility in item listing systems when compared to previous conventional item listing systems operations performed for similar functionality.

### ADDITIONAL SUPPORT FOR DETAILED DESCRIPTION OF THE INVENTION

### Example Item Listing System Environment

Referring now to FIG. 6, FIG. 6 illustrates an example item listing system 600 computing environment in which implementations of the present disclosure may be employed. In particular, FIG. 6 shows a high-level architecture of an example item listing platform 610 that can host a technical solution environment, or a portion thereof. It should be understood that this and other arrangements described herein are set forth as examples. For example, as described above, many elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

The item listing system 600 can be a cloud computing environment that provides computing resources for functionality associated with the item listing platform 610. For example, the item listing system 600 supports delivery of computing components and services - including servers, storage, databases, networking, applications, and machine learning associated with the item listing platform 610 and client device 620. A plurality of client devices (e.g., client device 620) include hardware or software that access resources on the item listing system 600. Client device 620 can include an application (e.g., client application 622) and interface data (e.g., client application interface data 624) that support client-side functionality associated with the item listing system. The plurality of client devices can access computing components of the item listing system 600 via a network (e.g., network 626) to perform computing operations.

The item listing platform 610 is responsible for providing a computing environment or architecture that includes the infrastructure that supports providing item listing platform functionality (e.g., e-commerce functionality). The item listing platform support storing item in item databases and providing a search system for receiving queries and identifying search results based on the queries. The item listing platform may also provide a computing environment with features for managing, selling, buying, and recommending different types of items. Item listing platform 610 can specifically be for a content platform such as EBAY content platform or e-commerce platform, developed by EBAY INC., of San Jose, California.

The item listing platform 610 can provide item listing operations 630 and item listing interfaces 640. The item listing operations 630 can include service operations, communication operations, resource management operations, security operations, and fault tolerance operations that support specific tasks or functions in the item listing platform 610. The item listing interfaces 640 can include service interfaces, communication interfaces, resource interfaces, security interfaces, and management and monitoring interfaces that support functionality between the item listing platform components. The item listing operations 630 and item listing interfaces 640 can enable communication, coordination and seamless functioning of the item listing system 600.

By way of example, functionality associated with item listing platform 610 can include shopping operations (e.g., product search and browsing, product selection and shopping cart, checkout and payment, and order tracking); user account operations (e.g., user registration and authentication, and user profiles); seller and product management operations (e.g., seller registration and product listing and inventory management); payment and financial operations (e.g., payment processing, refunds and returns); order fulfillment operations (e.g., order processing and fulfillment and inventory management); customer support and communication interfaces (e.g., customer support chat/email and notifications); security and privacy interfaces (e.g., authentication and authorization, payment security); recommendation and personalization interfaces (e.g., product recommendations and customer reviews and ratings); analytics and report interfaces (e.g., sales and inventory reports, and user behavior analytics); and APIs and Integration Interfaces (e.g., APIs for Third-Party Integration).

The item listing platform 610 can provide item listing platform databases (e.g., item listing platform databases 650) to manage and store different types of data efficiently. The item listing platform databases 650 can include relational databases, NoSQL databases, search databases, cache databases, content management systems, analytics databases, payment gateway database, customer relationship management databases, log and error databases, inventory and supply chain databases, and multi-channel databases that are used in combination to efficiently manage data and provide e-commerce experience for users.

The item listing platform 610 supports applications (e.g., applications 660) that is a computer program or software component or service that serves a specific function or set of functions to fulfil a particular item listing platform requirement or user requirement. Applications can be client-side (user-facing) and server-side (backend). Applications can also include application without any AI support (e.g., application 662) application supported by traditional AI model (e.g., application 664), and applications supported by generative AI models (e.g., application 666). By way of example, applications can include an online storefront application, mobile shopping app, admin and management console, payment gateway integration, user account and authentication application, search and recommendation engines, inventory and stock management application, order processing and fulfillment application, customer support and communication tools, content management system, analytics and report applications, marketing and promotion applications, multi-channel integration applications, log and error tracking applications, customer relationship management (CRM) applications, security applications, and APIs and web services that are used in combination to efficiently deliver e-commerce experiences for users.

The items listing platform 610 can include a machine learning engine (e.g., machine learning engine 670). The machine learning engine 670 refers to machine learning framework or machine learning platform that provides the infrastructure and tools to design, train, evaluate, and deploy machine learning models. The machine learning engine 670 can serve as the backbone for developing and deploying machine learning applications and solutions. Machine learning engine 670 can also provide tools for visualizing data and model results, as well as interpreting model decisions to gain insights into how the model is making predictions.

The machine learning engine 670 can provide the necessary libraries, algorithms, and utilities to perform various tasks within the machine learning workflow. The machine learning workflow can include data processing, model selection, model training, model evaluation, hyperparameter tuning, scalability, model deployment, inference, integration, customization, data visualization. Machine learning engine 670 can include pre-trained models for various tasks, simplifying the development process. In this way, the machine learning engine 670 can streamline the entire machine learning process, from data preparation and model training to deployment and inference, making it accessible and efficient for different types of users (e.g., customers, data scientists, machine learning engineers, and developers) working on a wide range of machine learning applications.

Machine learning engine 670 can be implemented in the item listing system 600 as a component that leverages machine learning algorithms and techniques (e.g., machine learning algorithms 672) to enhance various aspects of the adaptive pricing and inventory engine's functionality. Machine learning engine 670 can provide a selection of machine learning algorithms and techniques used to teach computers to learn from data and make predictions or decisions without being explicitly programmed. These techniques are widely used in various applications across different industries, and can include the following examples: supervised learning (e.g., linear regression: classification, support vector machines (SVM); unsupervised learning (e.g., clustering, principal component analysis (PCA), association rules (e.g., apriori); reinforcement learning (e.g., Q-Learning, deep Q-Network (DQN); and deep learning (e.g., neural networks, convolutional neural networks (CNN), and recurrent neural networks (RNN); and ensemble learning random forest.

Machine learning training data 674 supports the process of building, training, and fine-tuning machine learning models. Machine learning training data 674 consists of a labeled dataset that is used to teach a machine learning model to recognize patterns, make predictions, or perform specific tasks. Training data typically comprises two main components: input feature (X) and labels or target values (Y). Input features can include variables, attributes, or characteristics used as input to the machine learning model. Input features (X) can be numeric, categorical, or even textual, depending on the nature of the problem. For example, in a model for predicting house prices, input features might include the number of bedrooms, square footage, neighborhood, and so on. Labels or target values (Y) include the values that the model aims to predict or classify. Labels represent the desired output or the ground truth for each corresponding set of input features. For instance, in a spam email classifier, the labels would indicate whether each email is spam or not (i.e., binary classification). The training process involves presenting the model with the training data, and the model learns to make predictions or decisions by identifying patterns and relationships between the input features (X) and the target values (Y). A machine learning algorithm adjusts its internal parameters during training in order to minimize the difference between its predictions and the actual labels in the training data. Machine learning engine 670 can use historical and real-time data to train models and make predictions, continually improving performance and user experience.

Machine learning engine 670 can include machine learning models (e.g., machine learning models 676) generated using the machine learning engine workflow. Machine learning models 676 can include generative AI models and traditional AI models that can both be employed in the item listing system 600. Generative AI models are designed to generate new data, often in the form of text, images, or other media, based on patterns and knowledge learned from existing data. Generative AI models can be employed in various ways including content generation, product image generation, personalized product recommendations, natural language chatbots, and content summarization. Traditional AI models encompass a wide range of algorithms and techniques and can be employed in various ways including recommendation systems, predictive analytics, search algorithms, fraud detection, customer segmentation, image classification, Natural Language Processing (NLP) and A/B testing and optimization. In many cases, a combination of both generative and traditional AI models can be employed to provide a well-rounded and effective e-commerce experience, combining data-driven insights and creativity.

Machine learning engine 670 can be used to analyze data, make predictions, and automate processes to provide a more personalized and efficient shopping experience for users. By way of example, product recommendations search and filtering: pricing optimization, inventory and stock management: customer segmentation, churn prediction and retention, fraud detection, sentiment analysis, customer support and chatbots, image and video analysis, and ad targeting and marketing. The specific applications of machine learning within the item listing platform 610 can vary depending on the specific goals, available data, and resources.

### Example Distributed Computing System Environment

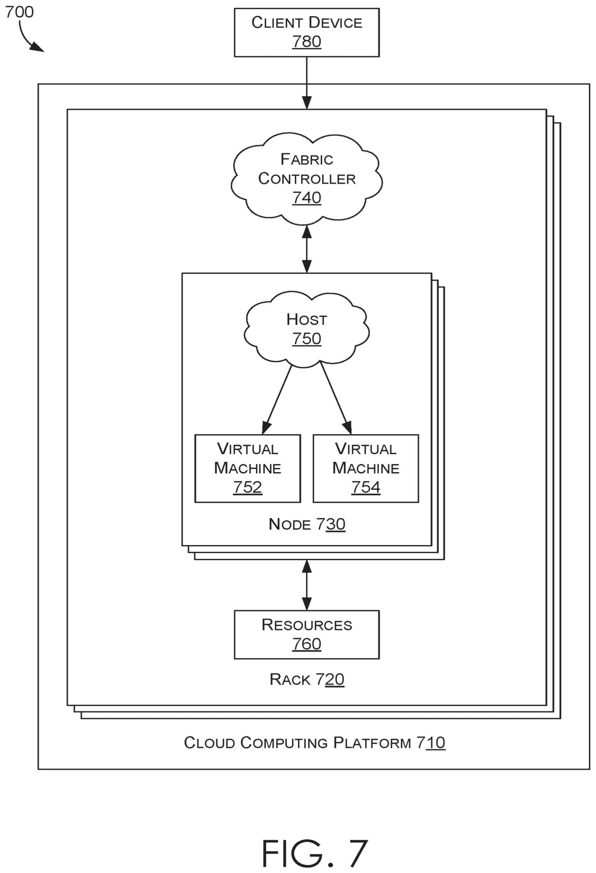

Referring now to FIG. 7, FIG. 7 illustrates an example distributed computing environment 700 in which implementations of the present disclosure may be employed. In particular, FIG. 7 shows a high-level architecture of an example cloud computing platform 710 that can host a technical solution environment, or a portion thereof (e.g., a data trustee environment). It should be understood that this and other arrangements described herein are set forth only as examples. For example, as described above, many of the elements described herein may be implemented as discrete or distributed components or in conjunction with other components, and in any suitable combination and location. Other arrangements and elements (e.g., machines, interfaces, functions, orders, and groupings of functions) can be used in addition to or instead of those shown.

Data centers can support distributed computing environment 700 that includes cloud computing platform 710, rack 720, and node 730 (e.g., computing devices, processing units, or blades) in rack 720. The technical solution environment can be implemented with cloud computing platform 710 that runs cloud services across different data centers and geographic regions. Cloud computing platform 710 can implement fabric controller 740 component for provisioning and managing resource allocation, deployment, upgrade, and management of cloud services. Typically, cloud computing platform 710 acts to store data or run service applications in a distributed manner. Cloud computing platform 710 in a data center can be configured to host and support operation of endpoints of a particular service application. Cloud computing platform 710 may be a public cloud, a private cloud, or a dedicated cloud.

Node 730 can be provisioned with host 750 (e.g., operating system or runtime environment) running a defined software stack on node 730. Node 730 can also be configured to perform specialized functionality (e.g., compute nodes or storage nodes) within cloud computing platform 710. Node 730 is allocated to run one or more portions of a service application of a tenant. A tenant can refer to a customer utilizing resources of cloud computing platform 710. Service application components of cloud computing platform 710 that support a particular tenant can be referred to as a multi-tenant infrastructure or tenancy. The terms service application, application, or service are used interchangeably herein and broadly refer to any software, or portions of software, that run on top of, or access storage and compute device locations within, a datacenter.

When more than one separate service application is being supported by nodes 730, nodes 730 may be partitioned into virtual machines (e.g., virtual machine 752 and virtual machine 754). Physical machines can also concurrently run separate service applications. The virtual machines or physical machines can be configured as individualized computing environments that are supported by resources 760 (e.g., hardware resources and software resources) in cloud computing platform 710. It is contemplated that resources can be configured for specific service applications. Further, each service application may be divided into functional portions such that each functional portion is able to run on a separate virtual machine. In cloud computing platform 710, multiple servers may be used to run service applications and perform data storage operations in a cluster. In particular, the servers may perform data operations independently but exposed as a single device referred to as a cluster. Each server in the cluster can be implemented as a node.

Client device 780 may be linked to a service application in cloud computing platform 710. Client device 780 may be any type of computing device, which may correspond to computing device 800 described with reference to FIG. 7, for example, client device 780 can be configured to issue commands to cloud computing platform 710. In embodiments, client device 780 may communicate with service applications through a virtual Internet Protocol (IP) and load balancer or other means that direct communication requests to designated endpoints in cloud computing platform 710. The components of cloud computing platform 710 may communicate with each other over a network (not shown), which may include, without limitation, one or more local area networks (LANs) and/or wide area networks (WANs).

### Example Computing Environment

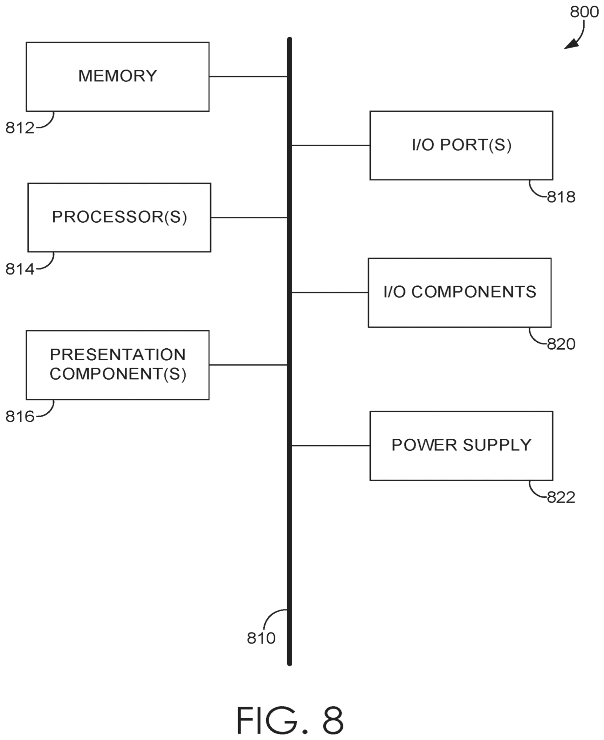

Having briefly described an overview of embodiments of the present invention, an example operating environment in which embodiments of the present invention may be implemented is described below in order to provide a general context for various aspects of the present invention. Referring initially to FIG. 8 in particular, an example operating environment for implementing embodiments of the present invention is shown and designated generally as computing device 800. Computing device 800 is but one example of a suitable computing environment and is not intended to suggest any limitation as to the scope of use or functionality of the invention. Neither should computing device 800 be interpreted as having any dependency or requirement relating to any one or combination of components illustrated.

The invention may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform tasks or implement particular abstract data types. The invention may be practiced in a variety of system configurations, including hand-held devices, consumer electronics, general-purpose computers, more specialty computing devices, etc. The invention may also be practiced in distributed computing environments where tasks are performed by remote-processing devices that are linked through a communications network.

With reference to FIG. 8, computing device 800 includes bus 810 that directly or indirectly couples the following devices: memory 812, one or more processors 814, one or more presentation components 816, input/output ports 818, input/output components 820, and illustrative power supply 822. Bus 810 represents what may be one or more buses (such as an address bus, data bus, or combination thereof). The various blocks of FIG. 8 are shown with lines for the sake of conceptual clarity, and other arrangements of the described components and/or component functionality are also contemplated. For example, one may consider a presentation component such as a display device to be an I/O component. Also, processors have memory. We recognize that such is the nature of the art and reiterate that the diagram of FIG. 8 is merely illustrative of an example computing device that can be used in connection with one or more embodiments of the present invention. Distinction is not made between such categories as "workstation," "server," "laptop," "hand-held device," etc., as all are contemplated within the scope of FIG. 8 and reference to "computing device."

Computing device 800 typically includes a variety of computer-readable media. Computer-readable media can be any available media that can be accessed by computing device 800 and includes both volatile and nonvolatile media, removable and non-removable media. By way of example, and not limitation, computer-readable media may comprise computer storage media and communication media.

Computer storage media include volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 800. Computer storage media excludes signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 812 includes computer storage media in the form of volatile and/or nonvolatile memory. The memory may be removable, non-removable, or a combination thereof. Exemplary hardware devices include solid-state memory, hard drives, optical-disc drives, etc. Computing device 800 includes one or more processors that read data from various entities such as memory 812 or I/O components 820. Presentation component(s) 816 present data indications to a user or other device. Exemplary presentation components include a display device, speaker, printing component, vibrating component, etc.

I/O ports 818 allow computing device 800 to be logically coupled to other devices including I/O components 820, some of which may be built in. Illustrative components include a microphone, joystick, game pad, satellite dish, scanner, printer, wireless device, etc.

### Additional Structural and Functional Features of Embodiments of the Technical Solution

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described in the paragraphs below may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the invention is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present invention are described with reference to a distributed computing environment; however the distributed computing environment depicted herein is merely exemplary. Components can be configured for performing novel aspects of embodiments, where the term "configured for" can refer to "programmed to" perform particular tasks or implement particular abstract data types using code. Further, while embodiments of the present invention may generally refer to the technical solution environment and the schematics described herein, it is understood that the techniques described may be extended to other implementation contexts.

Embodiments of the present invention have been described in relation to particular embodiments which are intended in all respects to be illustrative rather than restrictive. Alternative embodiments will become apparent to those of ordinary skill in the art to which the present invention pertains without departing from its scope.

From the foregoing, it will be seen that this invention is one well adapted to attain all the ends and objects hereinabove set forth together with other advantages which are obvious, and which are inherent to the structure.

It will be understood that certain features and sub-combinations are of utility and may be employed without reference to other features or sub-combinations. This is contemplated by and is within the scope of the claims.

Further features, aspects and embodiments are provided below in the following items:
Item 1. A computerized system comprising:
   one or more computer processors; and
   computer memory storing computer-useable instructions that, when used by the one or more computer processors, cause the one or more computer processors to perform operations, the operations comprising:
      capturing an item image for an item;
      generating a damage score based on damaged areas associated with item features of the item;
      identifying dynamic price analysis data associated with the item;
      based on the damage score and the dynamic price analysis data comprising real-time inputs that enable dynamic pricing predictions, generating a predicted price for the item using a machine learning price prediction engine; and
      communicating the predicted price to cause display of the predicted price.
Item 2. The system of Item 1, wherein the item image for the item is captured using an Augmented Reality (AR) or Mixed Reality (MR) visual recognition engine, the AR or MR enables real-time segmentation of visual data based on overlaying digital information on the item to support isolating the damaged areas, calculating dimensions, and quantifying an impact of the damaged areas on an overall condition of the item.
Item 3. The system of Item 1, wherein generating the damage score is based on:
   extracting the item features associated with the item;
   segmenting the damage areas using image processing and segmentation techniques to isolate damage regions; and
   generating the damage score using machine learning algorithms that generate standardized damage metrics for consistent assessments, wherein the damage score is factored into price optimization.
Item 4. The system of Item 1, wherein the price analysis data is associated with a plurality of features comprising continuous features, categorical features, and composite features, wherein the continuous features are normalized, the categorical features are encoded, and the composite features are computed.
Item 5. The system of Item 1, wherein the price analysis data is associated with features comprising one or more of: the damage score, condition, age, real-time market demand and supply trends, regional interest and buyer preferences, seasonal factors, and historical sales and competitor pricing data.
Item 6. The system of Item 1, wherein the machine learning price prediction engine enables price optimization by incorporating the damage score as a quantitative measure of a condition of the item, wherein the price optimization determines a competitive price by assessing how a value of the item decreases in relation to its corresponding damage score and price analysis data.
Item 7. The system of Item 1, the operations further comprising refining the predicted price based on validating, adjusting, and enhancing the predicted price, wherein refining the predicted price comprises generating a predicted price insight that includes explanation information associated with the predicted price and the item.
Item 8. The system of Item 1, wherein causing display of the predicted prices comprises causing display of a predicted price insight associated with one or more of: a plurality of recommended prices, a condition summary, and a market trend.
Item 9. The system of Item 1, wherein the machine learning price prediction engine is associated with an adaptive pricing and inventory engine that is integrated into an item listing workflow of an item listing platform.
Item 10. The system of Item 1, wherein the item is associated with an item listing workflow, the item listing workflow supports a seller user interface interaction model that provides a plurality of item listing workflows based on user interface selections identified via a seller user interface and the predicted price.
Item 11. The system of Item 1, the operations further comprising generating a suggested action for an item listing of the item based on analyzing item listing system data associated with item listings and item sales on the item listing system.
Item 12. A computer-implemented method, the computer-implemented method comprising:
   accessing a damage score based on damage areas associated with item features of an item;
   identifying dynamic price analysis data associated with the item;
   based on the damage score and the dynamic price analysis data comprising real-time inputs that enable dynamic pricing predictions, generating a predicted price for the item using a machine learning price prediction engine, wherein the machine learning price prediction engine enables price optimization by incorporating the damage score as a quantitative measure of a condition of the item; and
   updating one or more interface elements associated with an adaptive pricing and inventory management interface.
Item 13. The computer-implemented method of Item 12, wherein generating the damage score is based on:
   extracting the item features associated with the item;
   segmenting the damage areas using image processing and segmentation techniques to isolate damage regions; and
   generating the damage score using machine learning algorithms that generate standardized damage metrics for consistent assessments, wherein the damage score is factored into the price optimization.
Item 14. The computer-implemented method of Item 12, wherein the price analysis data is associated with a plurality of features comprising continuous features, categorical features, and composite features, wherein the continuous features are normalized, the categorical features are encoded, and the composite features are computed.
Item 15. The computer-implemented method of Item 12, wherein the price analysis data is associated with features comprising one or more of: the damage score, the condition, age, real-time market demand and supply trends, regional interest and buyer preferences, seasonal factors, and historical sales and competitor pricing data.
Item 16. The computer-implemented method of Item 12, wherein the price optimization determines a competitive price by assessing how a value of the item decreases in relation to its corresponding damage score and price analysis data.
Item 17. One or more computer-storage media having computer-executable instructions embodied thereon that, when executed by a computing system having a processor and memory, cause the processor to perform operations, the operations comprising:
   communicating an item image for an item;
   based on communicating the item image, receiving a predicted price, wherein the predicted price is generated for the item using a machine learning price prediction engine, a damage score and dynamic pricing analysis data comprising real-time inputs that enable dynamic pricing predictions; and
   causing display of the predicted price.
Item 18. The media of Item 17, wherein the item image for the item is captured using an Augmented Reality (AR) or Mixed Reality (MR) visual recognition engine, the AR or MR enables real-time segmentation of visual data based on overlaying digital information on the item to support isolating damaged areas, calculating dimensions, and quantifying an impact of the damaged areas on an overall condition of the item.
Item 19. The media of Item 18, the operations further comprising:
   communicating one or more user input using an item damage assessment interface associated with the overlay digital information, wherein the digital information is associated with item damage assessment interface elements of an item listing system; and
   based on the one or more user input, quantifying the impact of the damaged areas on the overall condition of the item.
Item 20. The media of Item 17, wherein the machine learning price prediction engine enables price optimization by incorporating the damage score as a quantitative measure of a condition of the item, wherein the price optimization determines a competitive price by assessing how a value of the item decreases in relation to its corresponding damage score and price analysis data.

## Claims

1. A computerized system comprising:
one or more computer processors; and
computer memory storing computer-useable instructions that, when used by the one or more computer processors, cause the one or more computer processors to perform operations, the operations comprising:
capturing an item image for an item;
generating a damage score based on damaged areas associated with item features of the item;
identifying dynamic price analysis data associated with the item;
based on the damage score and the dynamic price analysis data comprising real-time inputs that enable dynamic pricing predictions, generating a predicted price for the item using a machine learning price prediction engine; and
communicating the predicted price to cause display of the predicted price.

2. The system of claim 1, wherein the item image for the item is captured using an Augmented Reality (AR) or Mixed Reality (MR) visual recognition engine, the AR or MR enables real-time segmentation of visual data based on overlaying digital information on the item to support isolating the damaged areas, calculating dimensions, and quantifying an impact of the damaged areas on an overall condition of the item.

3. The system of claim 1 or 2, wherein generating the damage score is based on:
extracting the item features associated with the item;
segmenting the damage areas using image processing and segmentation techniques to isolate damage regions; and
generating the damage score using machine learning algorithms that generate standardized damage metrics for consistent assessments, wherein the damage score is factored into price optimization.

4. The system of any one of claims 1 to 3, wherein the price analysis data is associated with a plurality of features comprising continuous features, categorical features, and composite features, wherein the continuous features are normalized, the categorical features are encoded, and the composite features are computed, and/or wherein the price analysis data is associated with features comprising one or more of: the damage score, condition, age, real-time market demand and supply trends, regional interest and buyer preferences, seasonal factors, and historical sales and competitor pricing data.

5. The system of any one of claims 1 to 4, wherein the machine learning price prediction engine enables price optimization by incorporating the damage score as a quantitative measure of a condition of the item, wherein the price optimization determines a competitive price by assessing how a value of the item decreases in relation to its corresponding damage score and price analysis data, and/or the operations further comprising refining the predicted price based on validating, adjusting, and enhancing the predicted price, wherein refining the predicted price comprises generating a predicted price insight that includes explanation information associated with the predicted price and the item.

6. The system of any one of claims 1 to 5, wherein causing display of the predicted prices comprises causing display of a predicted price insight associated with one or more of: a plurality of recommended prices, a condition summary, and a market trend.

7. The system of any one of claims 1 to 6, wherein the machine learning price prediction engine is associated with an adaptive pricing and inventory engine that is integrated into an item listing workflow of an item listing platform.

8. The system of any one of claims 1 to 7, wherein the item is associated with an item listing workflow, the item listing workflow supports a seller user interface interaction model that provides a plurality of item listing workflows based on user interface selections identified via a seller user interface and the predicted price.

9. The system of any one of claims 1 to 8, the operations further comprising generating a suggested action for an item listing of the item based on analyzing item listing system data associated with item listings and item sales on the item listing system.

10. A computer-implemented method, the computer-implemented method comprising:
accessing a damage score based on damage areas associated with item features of an item;
identifying dynamic price analysis data associated with the item;
based on the damage score and the dynamic price analysis data comprising real-time inputs that enable dynamic pricing predictions, generating a predicted price for the item using a machine learning price prediction engine, wherein the machine learning price prediction engine enables price optimization by incorporating the damage score as a quantitative measure of a condition of the item; and
updating one or more interface elements associated with an adaptive pricing and inventory management interface.

11. The computer-implemented method of claim 10, wherein generating the damage score is based on:
extracting the item features associated with the item;
segmenting the damage areas using image processing and segmentation techniques to isolate damage regions; and
generating the damage score using machine learning algorithms that generate standardized damage metrics for consistent assessments, wherein the damage score is factored into the price optimization, and/or wherein the price analysis data is associated with a plurality of features comprising continuous features, categorical features, and composite features, wherein the continuous features are normalized, the categorical features are encoded, and the composite features are computed.

12. The computer-implemented method of claim 10 or 11, wherein the price analysis data is associated with features comprising one or more of: the damage score, the condition, age, real-time market demand and supply trends, regional interest and buyer preferences, seasonal factors, and historical sales and competitor pricing data, and/or wherein the price optimization determines a competitive price by assessing how a value of the item decreases in relation to its corresponding damage score and price analysis data.

13. One or more computer-storage media having computer-executable instructions embodied thereon that, when executed by a computing system having a processor and memory, cause the processor to perform operations, the operations comprising:
communicating an item image for an item;
based on communicating the item image, receiving a predicted price, wherein the predicted price is generated for the item using a machine learning price prediction engine, a damage score and dynamic pricing analysis data comprising real-time inputs that enable dynamic pricing predictions; and
causing display of the predicted price.

14. The media of claim 13, wherein the item image for the item is captured using an Augmented Reality (AR) or Mixed Reality (MR) visual recognition engine, the AR or MR enables real-time segmentation of visual data based on overlaying digital information on the item to support isolating damaged areas, calculating dimensions, and quantifying an impact of the damaged areas on an overall condition of the item, optionally the operations further comprising:
communicating one or more user input using an item damage assessment interface associated with the overlay digital information, wherein the digital information is associated with item damage assessment interface elements of an item listing system; and
based on the one or more user input, quantifying the impact of the damaged areas on the overall condition of the item.

15. The media of claim 13 or 14, wherein the machine learning price prediction engine enables price optimization by incorporating the damage score as a quantitative measure of a condition of the item, wherein the price optimization determines a competitive price by assessing how a value of the item decreases in relation to its corresponding damage score and price analysis data.
